# EUROPÄISCHE PATENTANMELDUNG

(11) **EP 2 644 433 A2**
(43) Veröffentlichungstag der Anmeldung: **02.10.2013**
(21) Anmeldenummer: 13160270.8
(22) Anmeldetag: 21.03.2013
(51) Int. Cl.: B60L 5/32

(54) **Fahrzeug mit einem Stromabnehmer**

(30) Priorität: 30.03.2012 DE 102012006405
(71) Anmelder: Siemens Aktiengesellschaft, 80333 München (DE)
(72) Erfinder: Lösch, Karsten, 12559 Berlin (DE)

(57) **Zusammenfassung**

Die Erfindung betriff ein Fahrzeug (2) mit einem Stromabnehmer (4) zur Einspeisung elektrischer Energie aus einem Fahrdraht (6) einer Oberleitungsanlage. Der Stromabnehmer (4) weist wenigstens eine kippbare Wippe (8) mit mindestens einer Schleifleiste (10) zur Herstellung eines elektrischen Schleifkontaktes zum Fahrdraht (6), ein sich am Fahrzeug (2) abstützendes und die wenigstens eine Wippe (8) tragendes Gestänge (12, 14), welches derart gelenkig mit dem Fahrzeug (2) und der wenigstens einen Wippe (8) verbunden ist, dass durch die Wippe (8) eine durch das Gestänge (12, 14) geführte Hub-und Senkbewegung (H) ausführbar ist, und ein mit dem Gestänge (12, 14) wirkverbundenes Stellglied (18), durch dessen Stellbewegung (S) die wenigstens eine Wippe (8) anheb- und absenkbar ist, auf. Erfindungsgemäß ist das Stellglied (18) als pneumatischer Aktor ausgebildet, der ein verformbares Fluidreservoir mit zwei gegenüber liegenden Endarmaturen aufweist, durch welche unter Druckbeaufschlagung bzw. Druckentlastung des Fluidreservoirs eine kontrahierende bzw. expandierende Stellbewegung (S) ausführbar ist. Hierdurch wird eine verbesserte dynamische und an Umgebungsbedingungen angepasste Regelung der Andruckkraft des Stromabnehmers (4) erreicht.

## Beschreibung

Die Erfindung bezieht sich auf ein Fahrzeug mit einem Stromabnehmer nach dem Oberbegriff des Patentanspruches 1.

Stromabnehmer für elektrisch getriebene Fahrzeuge - dies schließt schienengebundene Fahrzeuge, wie Züge, Lokomotiven und Straßenbahnen, aber auch nicht schienengebundene Fahrzeuge, wie Oberleitungsbusse und Nutzfahrzeuge für Tagebauareale aber auch für den öffentlichen Straßenraum, ein - habe die Aufgabe, den elektrisch leitenden Kontakt zwischen Oberleitung und Fahrzeug herzustellen. Dazu muss die Wippe zum An- bzw. Abdrahten unter Einhaltung spezifischer Toleranzen für die Andruckkraft zwischen Schleifleisten und Fahrdraht anheb-und absenkbar sein. Während der Fahrt können Eisbehang am Fahrdraht, eine Windlast sowie Temperaturschwankungen die Höhenlage des Fahrdrahtes schwanken lassen. Ebenso können Bodenwellen und Schlaglöcher in Fahrbahnen aber auch Schwankungen in der Fahrspurhaltung die Höhenlage des Fahrdrahtes relativ zum Fahrzeug ändern.

So ist beispielsweise aus der Patentschrift DE 32 44 945 C1 ein doppelpoliges Oberleitungssystem für elektrisch angetriebene Fahrzeuge des öffentlichen Personennahverkehrs bekannt. Von den zwei parallel verlaufenden Oberleitungsdrähten ist einer gegenüber Erde spannungsführend und der andere dient als Nullleiter. Ein O-Bus ist mit einem Paar von Stangenstromabnehmern ausgerüstet, um in dem Oberleitungssystem verkehren zu können. Im Betrieb nimmt das Paar von Stangenstromabnehmern einen aufgerichteten Zustand ein, in dem ihre Gleitschuhe ordnungsgemäß an den beiden Oberleitungsdrähten anliegen. Die Stromabnehmerstangen stehen unter der Kraft einer Aufrichtfeder, die für den nötigen Andruck der Gleitschuhe an die Oberleitungsdrähte sorgt. Die Stangenstromabnehmer sind am Dach des O-Busses um eine horizontale und quer zur Fahrtrichtung verlaufende Achse angelenkt, um abgesenkt und wieder hochgefahren werden zu können. Zur Kompensation von seitlichen Fahrabweichungen relativ zum Verlauf der Oberleitungsdrähte sind die Stangenstromabnehmer auch um eine vertikale Achse drehbar, um den Gleitkontakt zu den Oberleitungsdrähten halten zu können.

Die Offenlegungsschrift DE 101 18 608 A1 offenbart eine Anordnung zur Steuerung einer Anpresskraft eines an einem Fahrdraht anliegenden Stromabnehmers eines Schienenfahrzeugs. Sie umfasst einen Druckluftspeicher, der über ein Ventil mit einem Luftbalg zur Ansteuerung des Stromabnehmers verbunden ist. Hierdurch können höhere Anpresskräfte bei hohen Geschwindigkeiten eingestellt und die aerodynamische Zu- bzw. Abnahme der Anpresskraft des Stromabnehmers ausgeglichen werden.

Zugfedern und Luftbalge weisen feste Kraft-Weg-Kennlinien und lassen eine Regelung der Andruckkraft lediglich in festen Grenzen zu.

Der Erfindung liegt daher die Aufgabe zugrunde, ein gattungsgemäßes Fahrzeug mit einer verbesserten dynamischen und an Umgebungsbedingungen angepassten Regelung der Andruckkraft des Stromabnehmers bereitzustellen.

Die Aufgabe wird gelöst durch ein Fahrzeug der eingangs genannten Art mit den im kennzeichnenden Teil des Patentanspruches 1 angegebenen Merkmalen. Demnach ist das Stellglied als pneumatischer Aktor ausgebildet, der ein verformbares Fluidreservoir mit zwei gegenüber liegenden Endarmaturen aufweist. Unter Druckbeaufschlagung bzw. -entlastung des Fluidreservoirs ist durch die Endarmaturen eine relativ zueinander kontrahierende bzw. expandierende Stellbewegung ausführbar. Ein derartiger pneumatischer Muskel weist beispielsweise einen das Fluidreservoir bildenden Kontraktionsschlauch auf, dessen offene Seiten in je eine Endarmatur eingespannt sind. Wird das Fluidreservoir mit Druck beaufschlagt, so dehnt sich der Schlauch radial aus und schrumpft dafür in Längsrichtung. Dabei bewegen sich die Endarmaturen aufeinander zu und führen so eine kontrahierende Stellbewegung aus. Bei anschließender Druckentlastung geht die radiale Ausdehnung zurück und der Kontraktionsschlauch expandiert wieder in Längsrichtung. Die Endarmaturen bewegen sich dadurch voneinander weg und führen dabei eine expandierende Stellbewegung aus. Der pneumatische Aktor kann eine schnelle und dank geringer Reibung ruckfreie Stellbewegung ausführen. Dadurch kann ein zügiges An- und Abdrahten des Stromabnehmers gewährleistet werden. Im Vergleich zu herkömmlichen Pneumatikzylindern weist ein pneumatischer Muskel mit Vorteil ein hohes Kraft-Gewichts-Verhältnis auf. Außerdem besitzen sie eine kleinere Baugröße als Zugfedern und Luftbalge.

In einer vorteilhaften Ausführungsform des erfindungsgemäßen Fahrzeugs ist eine die Stellkraft in Abhängigkeit des Stellweges angebende Kennlinie des pneumatischen Aktors bei gegebenem Reservoirvolumen durch die Höhe des Fluiddruckes einstellbar. Die nutzbare Stellkraft hat ihr Maximum zu Beginn der kontrahierenden Stellbewegung und fällt dann ab, bis die maximale Verformung des Kontraktionsschlauches erreicht ist. Die maximal zulässige Stellkraft steigt mit zunehmendem Betriebsdruck des Fluids, beispielsweise Luft. So kann eine Regelung der Andruckkraft über eine Regelung des Fluiddruckes, mit dem das Fluidreservoir beaufschlagt wird, erfolgen.

In einer bevorzugten Ausgestaltung des erfindungsgemäßen Fahrzeugs ist eine die Stellkraft in Abhängigkeit des Stellweges angebende Kennlinie des pneumatischen Aktors durch Vorspannung des Fluidreservoirs bei Montage der Endarmaturen einstellbar. Seine maximale Stellkraft und Kontraktion bei Druckbeaufschlagung entfaltet der pneumatische Aktor, wenn der Kontraktionsschlauch unter einer Vorspannung montiert wird. Durch ein solches Vorrecken des Kontraktionsschlauches wird ebenfalls die Kennlinie des pneumatischen Muskels beeinflusst. Hierdurch wirkt der Aktor als pneumatische, dynamisch regelbare Feder mit verschiedenen Kennlinien, welche dann durch das Volumen des Fluidreservoirs und den Fluiddruck bestimmt wird. Hierdurch kann folglich ein kombiniertes Stellglied aus Pneumatikzylinder und mechanischer Zugfeder substituiert werden.

In einer vorteilhaften Ausgestaltung weist das erfindungsgemäße Fahrzeug Sensormittel zur Erfassung von eine Andruckkraft zwischen Schleifleisten und Fahrdraht beeinflussenden Messgrößen, eine Regeleinheit zur Ermittlung eines Stellwertes für den Fluiddruck im Fluidreservoir in Abhängigkeit der erfassten Messgrößen, und Steuermittel zur Einstellung des ermittelten Fluiddruckes auf. Die Sensormittel können einen Geschwindigkeitssensor zur Messung der Fahrgeschwindigkeit, einen Windsensor zur Messung der Windgeschwindigkeit, einen Temperatursensor zur Messung der Umgebungstemperatur, einen Kraftsensor zur Messung der Kontaktkraft zwischen Schleifleiste und Fahrdraht und/oder einen Sensor zur Messung der Relativlage, insbesondere der Höhenlage, des Fahrdrahtes zum Fahrzeug aufweisen. Diese messbaren Umgebungsbedingungen beeinflussen die erforderliche Andruckkraft und deren Messwerte werden der Regeleinheit zugeführt, die einen Stellwert für den Fluiddruck ermittelt, mit dem der pneumatische Aktor zu beaufschlagen ist, um über das Gestänge und die Wippe die gewünschte Andruckkraft zu erzeugen. Der Stellwert wird beispielsweise als Proportionalventil ausgebildeten Steuermitteln zugeführt, die einen stetigen Übergang der Ventilöffnung zur Einstellung eines Volumenstromes aus einem Druckspeicher in das Fluidreservoir gestattet.

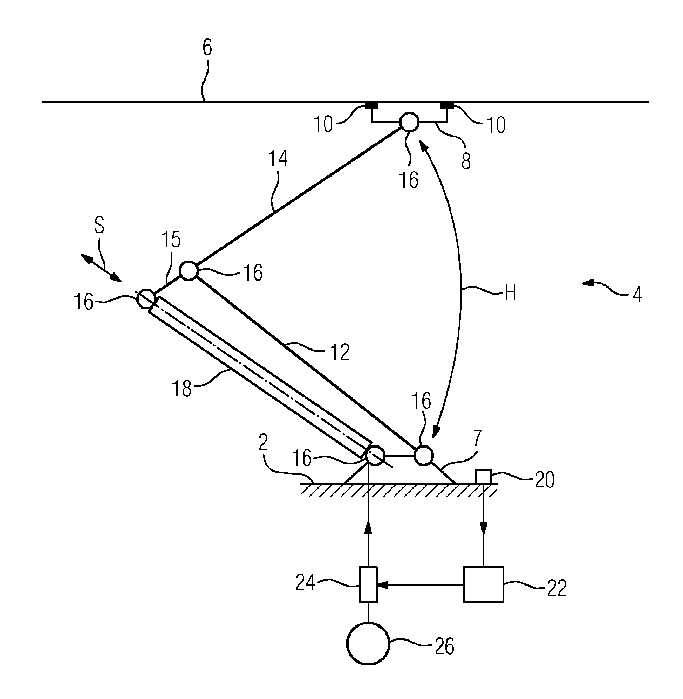

Weitere Eigenschaften und Vorteile der Erfindung ergeben sich aus nachfolgender Beschreibung eines Ausführungsbeispiels anhand der Zeichnung, in deren einziger Figur ein erfindungsgemäßes Fahrzeug schematisch veranschaulicht ist.

Gemäß der Figur weist ein Fahrzeug 2, von dem der Übersichtlichkeit halber nur ein Abschnitt dargestellt ist, der das Dach eines Schienenfahrzeugs oder ein Zwischenaufbau eines Lastkraftwagens sein kann, einen Stromabnehmer 4 zur Einspeisung elektrischer Energie aus einem Fahrdraht 6 einer Oberleitungsanlage auf. Bei der Oberleitungsanlage kann es sich um eine Kettenwerks-Oberleitungsanlage oder um eine Deckenstromschienen-Oberleitungsanlage handeln. Sie kann einpolig mit einem Fahrdraht 6 als Hinleiter sein, wobei der Rückleiter durch Fahrschienen gebildet ist, oder sie kann zweipolig mit einem als Hinleiter ausgebildeten Fahrdraht 6 und einem parallel zu diesem als Rückleiter ausgebildeten Fahrdraht 6 sein. Der Stromabnehmer 4 stützt sich über einen Rahmen 7 und gegebenenfalls nicht dargestellten Isolatoren am Fahrzeug 2 ab. Der Stromabnehmer 4 weist eine Wippe 8 je Fahrdraht 6 auf, die zwei in Fahrtrichtung - in der Figur von links nach rechts - hintereinander angeordnete und quer zur Fahrtrichtung ausgerichtete Schleifleisten 10 trägt. Der Stromabnehmer 4 umfasst ferner ein Gestänge, nämlich einen Unterarm 12, der über ein Gelenk 16 mit dem Rahmen 7 verbunden ist, und einen Oberarm 14, der ebenfalls über ein Gelenk 16 mit der Wippe 8 verbunden ist. An ihren jeweils anderen Enden sind Oberarm 14 und Unterarm 12 über ein Gelenk 16 untereinander in Form einer Schere verbunden. Um das Scherengestänge von einem geschlossenen Zustand, in dem die Wippe 8 abgesenkt auf dem Rahmen 7 aufsitzt, in einen geöffneten Zustand, in dem die Wippe 8 angehoben ist und ihre Schleifleisten 10 einen elektrischen Kontakt mit dem Fahrdraht 6 herstellen, zu überführen, weist der Stromabnehmer 4 eine Stellglied 18 auf. Das Stellglied 18 ist einerseits mit dem Rahmen 7 über ein Gelenk 16 verbunden. Am anderen Ende weist es ein Gelenk 16 auf, welches über eine Lenkstrebe 15 mit dem Scherengelenk 16 in Verbindung steht. Sämtliche Gelenke 16 weisen im dargestellten Ausführungsbeispiel Gelenkachsen auf, die quer zur Fahrtrichtung - als senkrecht zur Zeichnungsebene - ausgerichtet sind. Das Stellglied 18 ist nun in der Lage, eine Stellbewegung S auszuführen, die die beiden endseitigen Gelenke 16 relativ voneinander weg bzw. aufeinander zu bewegen. Die Stellbewegung S des Stellgliedes 18 bewirkt auf die Wippe 8 eine durch das Gestänge geführte Hub- bzw. Senkbewegung.

Erfindungsgemäß ist das Stellglied 18 als pneumatischer Aktor ausgebildet, der ein verformbares Fluidreservoir mit zwei gegenüber liegenden Endarmaturen aufweist. Das Fluidreservoir wird beispielsweise durch einen nicht dargestellten, druckdichten Kontraktionsschlauch mit eingearbeitetem Gewebenetz aus hochfesten Fasern gebildet. Mit seinen offenen Seiten ist der Kontraktionsschlauch in den beiden Endarmaturen eingespannt, über die dieser pneumatische Muskel mit den Gelenken 16 verbunden ist. Die Endarmaturen führen unter Druckbeaufschlagung bzw. -entlastung des Fluidreservoirs die kontrahierende bzw. expandierende Stellbewegung S aus.

Eine die Stellkraft in Abhängigkeit des Stellweges angebende Kennlinie des pneumatischen Aktors ist bei gegebenem Nennvolumen des Fluidreservoirs durch die Höhe des Fluiddruckes und/oder durch Vorspannung des Fluidreservoirs bei Montage der Endarmaturen einstellbar. Das erfindungsgemäße Stellglied 18 kann die Funktion einer pneumatischen Feder mit dynamischer Kennlinie übernehmen. Hierdurch kann auch die bekannte Kombination aus einem Pneumatikzylinder und einer Feder durch den pneumatischen Muskel substituiert werden.

Zur Regelung der Andruckkraft zwischen den Schleifleisten 10 des Stromabnehmers 4 und dem Fahrdraht 6 weist das Fahrzeug 2 Sensormittel 20 zur Erfassung von die Andruckkraft beeinflussenden Messgrößen auf. Die Sensormittel 20 können einen Geschwindigkeitssensor zur Messung der Fahrgeschwindigkeit aufweisen, da mit zunehmender Fahrgeschwindigkeit die Andruckkraft erhöht werden muss. Die Sensormittel 20 können auch einen Windsensor zur Messung der Windgeschwindigkeit aufweisen, da Seiten- und Gegenwind die Lage des Fahrdrahtes 6 beeinflussen können. Die Sensormittel 20 können auch einen Temperatursensor zur Messung der Umgebungstemperatur aufweisen, da die temepraturabhängige Längenänderung des Fahrdrahtes 6 dessen Höhenprofil ändert. Ebenso können die Sensormittel 20 einen Kraftsensor zur Messung der Kontaktkraft zwischen Schleifleiste und Fahrdraht aufweisen, um einen aktuellen Kontrollwert zu erfassen. Auch können die Sensormittel 20 einen Sensor zur direkten Messung der Relativlage, insbesondere der Höhenlage, des Fahrdrahtes zum Fahrzeug aufweisen, beispielsweise Magnetfeldsensoren oder einen Laserscanner. Diese messbaren Umgebungsbedingungen beeinflussen die erforderliche Andruckkraft und deren Messwerte werden einer Regeleinheit 22 des Fahrzeugs 2 zugeführt, die einen Stellwert für den Fluiddruck ermittelt. Mit diesem ist der pneumatische Aktor zu beaufschlagen, um über das Gestänge 12, 14 und die Wippe 8 die gewünschte Andruckkraft zu erzeugen. Der Stellwert wird beispielsweise als Proportionalventil ausgebildeten Steuermitteln 24 zugeführt, die einen stetigen Übergang der Ventilöffnung zur Einstellung eines Volumenstromes aus einem Druckspeicher 26 in das Fluidreservoir gestattet.

Der Einsatz eines pneumatischen Muskels als Stellglied 18 ist dabei unabhängig von der Bauart des Stromabnehmers 4 und die im Ausführungsbeispiel beschriebene Scherenform ist nur beispielhaft. Erfindungsgemäß ist der pneumatische Muskel für das An- und Abdrahten des Stromabnehmers 4, aber auch für die Höhenpositionierung des Stromabnehmers 4 und die dynamische Andruckkraftregelung mit Vorteil einsetzbar. Dies gilt sowohl für Stromabnehmer 4 mit einer Wippe 8 als auch mit zwei Wippen 8. Durch die geringe Baugröße des pneumatischen Muskels kann die Erfindung insbesondere bei beengten Einbauverhältnissen, wie etwa bei Lastkraftwagen auf dem oder hinter dem Führerhaus, genutzt werden. Außerdem können konstruktive Elemente bekannter Lösungen des Standes der Technik, wie Seilzüge und Umlenkmechaniken, eingespart werden.

## Patentansprüche

1. Fahrzeug (2) mit einem Stromabnehmer (4) zur Einspeisung elektrischer Energie aus einem Fahrdraht (6) einer Oberleitungsanlage, wobei der Stromabnehmer (4) wenigstens eine kippbare Wippe (8) mit mindestens einer Schleifleiste (10) zur Herstellung eines elektrischen Schleifkontaktes zum Fahrdraht (6), ein sich am Fahrzeug (2) abstützendes und die wenigstens eine Wippe (8) tragendes Gestänge (12, 14), welches derart gelenkig mit dem Fahrzeug (2) und der wenigstens einen Wippe (8) verbunden ist, dass durch die Wippe (8) eine durch das Gestänge (12, 14) geführte Hub- und Senkbewegung (H) ausführbar ist, und ein mit dem Gestänge (12, 14) wirkverbundenes Stellglied (18), durch dessen Stellbewegung (S) die wenigstens eine Wippe (8) anheb- und absenkbar ist, aufweist, **dadurch gekennzeichnet, dass** das Stellglied (18) als pneumatischer Aktor ausgebildet ist, der ein verformbares Fluidreservoir mit zwei gegenüber liegenden Endarmaturen aufweist, durch welche unter Druckbeaufschlagung bzw. -entlastung des Fluidreservoirs eine kontrahierende bzw. expandierende Stellbewegung (S) ausführbar ist.

2. Fahrzeug (2) nach Anspruch 1, wobei eine die Stellkraft in Abhängigkeit des Stellweges angebende Kennlinie des pneumatischen Aktors bei gegebenem Nennvolumen des Fluidreservoirs durch die Höhe des Fluiddruckes einstellbar ist.

3. Fahrzeug (2) nach Anspruch 1 oder 2, wobei eine die Stellkraft in Abhängigkeit des Stellweges angebende Kennlinie des pneumatischen Aktors durch Vorspannung des Fluidreservoirs bei Montage der Endarmaturen einstellbar ist.

4. Fahrzeug (2) nach einem der Ansprüche 1 bis 3, mit Sensormitteln (20) zur Erfassung von eine Andruckkraft zwischen Schleifleisten (10) und Fahrdraht (6) beeinflussenden Messgrößen, einer Regeleinheit (22) zur Ermittlung eines Stellwertes für den Fluiddruck im Fluidreservoir in Abhängigkeit der erfassten Messgrößen, und Steuermittel (24) zur Einstellung des ermittelten Fluiddruckes.
